(19) Europäisches Patentamt / European Patent Office / Office européen des brevets

(11) **EP 4 339 159 A1**

(12) **EUROPEAN PATENT APPLICATION**
published in accordance with Art. 153(4) EPC

(43) Date of publication:
20.03.2024 Bulletin 2024/12

(21) Application number: 22807487.8

(22) Date of filing: 11.05.2022

(51) International Patent Classification (IPC):
$C01G\ 23/053^{(2006.01)}$ $\quad$ $C09C\ 1/36^{(2006.01)}$
$C09D\ 17/00^{(2006.01)}$ $\quad$ $C09D\ 201/00^{(2006.01)}$
$C09D\ 7/61^{(2018.01)}$

(52) Cooperative Patent Classification (CPC):
C01G 23/053; C09C 1/36; C09D 7/61; C09D 17/00;
C09D 201/00

(86) International application number:
PCT/JP2022/019882

(87) International publication number:
WO 2022/239788 (17.11.2022 Gazette 2022/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.05.2021 JP 2021080602

(71) Applicant: JGC Catalysts and Chemicals Ltd.
Kawasaki-shi, Kanagawa 212-0013 (JP)

(72) Inventors:
• YAMAGUCHI, Jun
  Kitakyushu-shi, Fukuoka 808-0027 (JP)
• SHIMIZU, Takehiro
  Kitakyushu-shi, Fukuoka 808-0027 (JP)
• MURAGUCHI, Ryo
  Kitakyushu-shi, Fukuoka 808-0027 (JP)

(74) Representative: Gille Hrabal
Partnerschaftsgesellschaft mbB
Patentanwälte
Brucknerstraße 20
40593 Düsseldorf (DE)

(54) **RUTILE TITANIUM OXIDE PARTICLES, DISPERSION, COATING SOLUTION FOR FILM FORMATION, AND SUBSTRATE WITH COATING FILM**

(57) Rutile titanium oxide particles, in which Fe and Zr are dissolved to form a solid solution, have an interplanar spacing of a (110) plane obtained by X-ray diffraction measurement of 0.3250 nm or more and an average particle size in a range from 5 nm to 50 nm.

EP 4 339 159 A1

**Description**

TECHNICAL FIELD

The present invention relates to rutile titanium oxide particles.

BACKGROUND ART

Titanium oxide has been widely used as a photocatalyst, a material for an ultraviolet blocker, a material for a coating-film formation application liquid on an optical substrate, and the like. Difference in crystal structures of the titanium oxides, well-known examples of which are anatase, rutile, and brookite, results in different properties of the titanium oxides. For instance, anatase titanium oxide particles, whose photocatalytic activity is high, are used as a material for refresher, deodorant, and antifoulant. In contrast, rutile titanium oxide particles, which have a high refractive index and are low in photocatalytic activity as compared with the anatase titanium oxide particles, have been used in a hard coat layer for a substrate and the like. The hard coat layer contains components such as an organic silicon compound and resin in addition to the rutile titanium oxide. If the photocatalytic activity of the particles is excessively high, the components other than the titanium oxide can be decomposed. The decomposition, which is one of factors for cracks in the hard coat layer and reduction in adhesiveness between the substrate and the hard coat layer, causes a problem in using the substrate coated with a layer containing titanium oxide in an environment exposed to ultraviolet-containing light such as sunlight (weather resistance). Various solutions have been proposed against such a problem, which also occurs even with the use of typical rutile titanium oxide that in general is low in photocatalytic activity as compared with titanium oxide of other crystal types.

For instance, Patent Literature 1 discloses that, in order to provide an application liquid for forming a hard coat film that has a high refractive index and is excellent in transparency, weather resistance, and adhesiveness with a substrate, composite oxide particles of a titanium oxide component and an iron oxide component are added to the film formation application liquid so that $Fe_2O_3/TiO_2$ (weight ratio) falls in a range of 0.0005 or more and less than 0.005. As another example, Patent Literature 2 discloses composite oxide particles for providing an application liquid for forming a hard coat film that has a high refractive index, and excellent transparency, hot-water resistance, weather resistance, abrasion resistance, wear resistance, and stainability, exhibits no photochromicity, and is also excellent in adhesiveness with a substrate, and a hard-coat-formed substrate formed with a hard coat film having such excellent properties on a surface of the substrate. Specifically, the disclosed composite oxide particles are made of iron oxide, titanium oxide, and silica, where a weight ratio $Fe_2O_3/TiO_2$ is in a range of 0.0005 or more and less than 0.005 and a weight ratio $SiO_2/(Fe_2O_3 + TiO_2)$ is in a range of 0.001 or more and 1.0 or less supposing that iron oxide is expressed in an $Fe_2O_3$ equivalent, titanium oxide is expressed in a $TiO_2$ equivalent, and silica is expressed in an $SiO_2$ equivalent.

CITATION LIST

PATENT LITERATURE(S)

Patent Literature 1: JP 05-002102 A
Patent Literature 2: JP 11-172152 A

SUMMARY OF THE INVENTION

PROBLEM(S) TO BE SOLVED BY THE INVENTION

The present inventors have found that the coating film containing typical titanium oxide particles added with heteroelements are, though showing some improved weather resistance, still insufficient in terms of coloration and need further improvement.

In view of the above, an object of the invention is to provide titanium oxide particles capable of providing a coating film that is excellent in weather resistance and shows less coloration.

MEANS FOR SOLVING THE PROBLEM(S)

According to an aspect of the invention, the following rutile titanium oxide particles and the like are provided.

[1] Rutile titanium oxide particles containing Fe and Zr dissolved to form a solid solution, where an interplanar spacing of a (110) plane obtained by X-ray diffraction measurement is 0.3250 nm or more, and an average particle size is in a range from 5 nm to 50 nm.

[2] The rutile titanium oxide particles according to [1], where a Ti content in a $TiO_2$ equivalent is in a range from 40 mass% to 90 mass% with respect to a total mass of the rutile titanium oxide particles.

[3] The rutile titanium oxide particles according to [1] or [2], where an Fe content is in a range from 0.01 mol% to 5 mol% with respect to Ti.

[4] The rutile titanium oxide particles according to any one of [1] to [3], where a Zr content is in a range from 0.1 mol% to 15 mol% with respect to Ti.

[5] The rutile titanium oxide particles according to any one of [1] to [4], where an Sn content is in a range from 1 mol% to 30 mol% with respect to Ti.

[6] The rutile titanium oxide particles according to any one of [1] to [5], where an Si content is in a range from 5 mol% to 70 mol% with respect to Ti.

[7] The rutile titanium oxide particles according to any one of [1] to [6], where a Zr/Fe mol ratio is 1 or more.

[8] A dispersion solution containing the rutile titanium oxide particles according to any one of [1] to [7].

[9] A coating-film formation application liquid containing the rutile titanium oxide particles according to any one of [1] to [7] and a matrix formation component.

[10] A substrate with a coating film containing the rutile titanium oxide particles according to any one of [1] to [7].

According to the above aspects of the invention, titanium oxide particles capable of providing a coating film that is excellent in weather resistance and shows less coloration can be provided.

DESCRIPTION OF EMBODIMENT(S)

The present inventors have found that particles exhibiting low photocatalytic activity can be obtained by dissolving Fe and Zr in rutile titanium oxide to form a solid solution. A coating film containing the particles exhibits significantly improved weather resistance. Further, the coloration, which is likely to be seen in a coating film containing particles produced by dissolving Fe in rutile titanium oxide to form a solid solution, can be eliminated by the combination of the specific elements (i.e. Fe and Zr).

The invention relates to rutile titanium oxide particles, in which Fe and Zr are dissolved to form a solid solution, whose interplanar spacing of (110) plane measured by X-ray diffraction measurement is 0.3250 nm or more, and whose average particle size is in a range from 5 nm to 50 nm.

The rutile titanium oxide particles of the invention (sometimes referred to as "titanium oxide particles of the invention" hereinafter) will be detailed below.

Titanium Oxide Particles

Titanium oxide particles of the invention are made of rutile titanium oxide. The rutile titanium oxide, whose photocatalytic activity is low as compared with titanium oxides of other crystal structures, is suitable as a material for forming a coating film with high weather resistance. Further, since the rutile titanium oxide shows a larger refractive index than titanium oxides of other crystal structures, the rutile titanium oxide is suitably usable as an optical material. In addition, the rutile titanium oxide is suitably usable as UV (ultraviolet) absorbing materials in view of its narrow band gap and excellent UV absorption ability as compared with titanium oxides of other crystal structures. By applying such a material having UV absorption ability on a substrate, degradation of the substrate caused by ultraviolet can be restrained and the weather resistance of the coated substrate can be improved. Examples of other crystal structures of titanium oxide include anatase and brookite, which can be identified through X-ray diffraction measurement.

The content of Ti in the titanium oxide particles of the invention expressed in a $TiO_2$ equivalent is preferably in a range from 40 mass% to 90 mass% with respect to the total mass of the rutile titanium oxide particles, more preferably in a range from 45 mass% to 80 mass%, and still more preferably in a range from 50 mass% to 70 mass%. When the Ti content is too small, the refractive index and the UV absorption ability are likely to be lowered. In contrast, too much Ti content results in high photocatalytic activity. Accordingly, rutile titanium oxide particles with a high refractive index and UV absorption ability and low photocatalytic activity can be obtained at the Ti content within the above range.

Fe and Zr are dissolved in the titanium oxide particles of the invention to form a solid solution. In general, a solid solution refers to a mixture of two or more (metal and/or non-metal) elements that forms a homogeneous solid phase in the entirety thereof. Such a solid solution is categorized into a substitutional solid solution and an interstitial solid solution. In both the substitutional solid solution and the interstitial solid solution, the crystal lattice of rutile titanium oxide changes when Fe and Zr are dissolved to form a solid solution. Such a change in crystal lattice is observable through X-ray diffraction measurement. With regard to the titanium oxide particles of the invention, when Fe and Zr are dissolved to form a solid solution, the interplanar spacing of a (110) plane measured by X-ray diffraction measurement becomes 0.3250 nm or more.

The content of Fe in the titanium oxide particles of the invention in terms of mol% to Ti (i.e. supposing that Ti content is 100 mol%) is preferably in a range from 0.01 mol% to 5 mol%, more preferably in a range from 0.05 mol% to 3 mol%, and still more preferably in a range from 0.08 mol% to 2 mol%. At the Fe content within the above range, the photocatalytic activity of the rutile titanium oxide particles can be lowered and the rutile titanium oxide particles are less colored.

The content of Zr in the titanium oxide particles of the invention in terms of mol% to Ti is preferably in a range from 0.1 mol% to 15 mol%, more preferably in a range from 1 mol% to 10 mol%, and still more preferably in a range from 3 mol% to 7 mol%. The titanium oxide particles of the invention, in which both of Zr and Fe are dissolved to form a solid solution, exhibits significantly lowered photocatalytic activity as compared with titanium oxide particles in which one of Zr and Fe is separately dissolved to form a solid solution. Due to the synergetic effect, the photocatalytic activity can be lowered while minimizing the coloration caused when Fe is dissolved to form a solid solution.

A molar ratio (Zr/Fe) of Zr to Fe contained in the titanium oxide particles of the invention is preferably 1 or more, more preferably in a range from 1 to 30, and still more preferably in a range from 1 to 15. When the molar ratio of Zr to Fe is within the above range, the titanium oxide particles with further lowered photocatalytic activity and less coloration can be obtained.

The titanium oxide particles of the invention preferably contain element(s) other than Ti, Fe, and Zr. Specifically, the titanium oxide particles of the invention preferably contain at least one element selected from Sn, Si, K, and Al, and still more preferably Sn and/or Si. Sn, which enhances crystallizability of rutile titanium oxide, restrains formation of crystal structure other than rutile (e.g. anatase). The weather resistance and the transparency of the titanium oxide particles of the invention are thus further improvable. In view of the above, the content of Sn in terms of mol% to Ti is preferably in a range from 1 mol% to 30 mol%, more preferably in a range from 3 mol% to 20 mol%, and still more preferably in a range from 5 mol% to 15 mol%.

In contrast, Si further reduces the photocatalytic activity of the titanium oxide particles of the invention. In view of the above, the content of Si in terms of mol% to Ti is preferably in a range from 5 mol% to 70 mol%, more preferably in a range from 10 mol% to 50 mol%, and still more preferably in a range from 15 mol% to 40 mol%.

The content of element(s) other than Ti, Fe, and Zr in terms of mol% to Ti is preferably in a range from 5 mol% to 120 mol%, more preferably in a range from 10 mol% to 70 mol%, and still more preferably in a range from 20 mol% to 50 mol%. When the content of the element(s) other than Ti, Fe, and Zr is within the above range, titanium oxide particles with a high refractive index and low photocatalytic activity can be obtained.

The titanium oxide particles of the invention are preferably coated particles provided with a coating layer on the surface thereof. For instance, when a coating layer containing at least one of elements selected from Zr, Si, Al, Sb and the like is formed, the photocatalytic activity of the titanium oxide particles of the invention can be further lowered. Especially, when a coating layer containing at least one of Si or Zr is formed, the photocatalytic activity can be further lowered and dispersibility in a polar solvent (e.g. water and alcohol) is likely to be improved.

A surface treatment layer that is produced by surface treatment by an organic silicon compound (e.g. silane coupling agent) or amine compound is preferably provided on the surface of the titanium oxide particles of the invention or a surface of the coating layer. When the surface is modified with the organic silicon compound or the amine compound, dispersibility in a resin or organic solvent component contained in a later-described dispersion solution or coating-film formation application liquid can be enhanced.

The ratio of the coating layer provided on the titanium oxide particles of the invention in an oxide equivalent is preferably in a range from 1 mass% to 30 mass% with respect to the total mass of the coated particles, more preferably in a range from 1 mass% to 20 mass%, and still more preferably in a range from 3 mass% to 10 mass%. When the coating layer contains Zr, Si, Al, and Sb, the mass of the coating layer is calculated respectively in equivalents of $ZrO_2$, $SiO_2$, $Al_2O_3$, and $Sb_2O_5$. When other element(s) is contained, the oxide is estimated based on the valence of the material. For instance, when K derived from KOH is contained, the mass of K is calculated in a $K_2O$ equivalent. When there is a change in the valence of the material in the production process, the finally obtained coated particles are subjected to X-ray photoelectron spectroscopic measurement (XPS measurement) to specify the valence of the element(s). Specifically, peaks assigned to respective valences are identified from the spectrum obtained through the XPS measurement and the oxide is estimated based on the valence of one of the peaks with the largest intensity. For instance, when there are peaks assigned to $Cu^+$ and $Cu^{2+}$ and the intensity at the peak of $Cu^{2+}$ is larger than the intensity at the peak of $Cu^+$, the mass of Cu is calculated in a CuO equivalent. The ratio of the surface treatment layer is preferably in a range from 1 mass% to 10 mass% with respect to the total mass of the coated particles, more preferably in a range from 2 mass% to 9 mass%, and still more preferably in a range from 3 mass% to 8 mass%. The ratio of the surface treatment layer is calculated by expressing inorganic component(s) contained in the surface treatment layer in equivalent(s) of oxide(s) thereof. For instance, when the surface treatment layer derived from a silane coupling agent is provided, Si contained in the surface treatment layer is expressed in an $SiO_2$ equivalent for calculation.

The average particle size of the titanium oxide particles of the invention is in a range from 5 nm to 50 nm, preferably in a range from 8 nm to 40 nm, and more preferably in a range from 10 nm to 30 nm. When the average particle size is within the above range, a dense coating film is likely to be formed in forming the coating film containing the titanium oxide particles of the invention. The average particle size of the invention is an average of sizes of primary particles measured by an electron microscope.

The refractive index of the titanium oxide particles of the invention is preferably 1.8 or more, more preferably 2 or more, and still more preferably 2.1 or more. The titanium oxide particles of the invention with such a high refractive index is suitably usable as an optical material. The upper limit of the refractive index is, though not specified, optionally 3 or less.

The yellowness index (YI value) of the titanium oxide particles of the invention is preferably 58 or less, more preferably 55 or less. When Fe is dissolved in rutile titanium oxide to form a solid solution, the YI value becomes large (i.e. becomes more yellowish). However, the titanium oxide particles of the invention, in which both of Zr and Fe are dissolved to form a solid solution, exhibits a high restraining effect for photocatalytic activity even with a small amount of Fe, thereby achieving both of low coloration and high weather resistance.

The photocatalytic activity of the titanium oxide particles of the invention can be calculated based on a change rate (discoloration rate) of absorbance before and after irradiating a system of a mixture of the titanium oxide particles and a dye with ultraviolet for three hours. The discoloration rate of the titanium oxide particles of the invention is preferably 30% or less, more preferably 20% or less, still more preferably 15% or less, and still further more preferably 10% or less. Higher photocatalytic activity results in a higher discoloration rate and lower photocatalytic activity results in a lower discoloration rate. The titanium oxide particles of the invention exhibits a low discoloration rate (i.e. low photocatalytic activity).

Dispersion Solution Containing Titanium Oxide Particles

The titanium oxide particles of the invention are optionally powdery or alternatively are in a form of a dispersion solution of the titanium oxide particles dispersed in a solvent. The solvent of the dispersion solution is any of water, a combination of water and an organic solvent, and an organic solvent. In order to prepare the dispersion solution containing an organic solvent in a dispersion medium, for instance, a part or all of water contained in the dispersion solution is optionally substituted with the organic solvent using a rotary evaporator, an ultrafiltration membrane, or another known process.

Examples of the organic solvent usable for the dispersion solution containing the titanium oxide particles of the invention include: alcohols such as methanol, ethanol, ethylene glycol, 1-propanol, 2-propanol, 1-butanol, 2-butanol, and octanol; esters such as ethyl acetate, butyl acetate, ethyl lactate, propylene glycol monomethylether acetate, propylene glycol monoethylether acetate, and $\gamma$-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methylethyl ketone, methylisobutyl ketone, acetyl acetone, and cyclohexanone; aromatic hydrocarbons such as benzene, toluene, xylene, and ethylbenzene; cyclic hydrocarbons such as cyclohexane; and amides such as dimethyl formamide, N,N-dimethyl acetoacetamide, and N-methylpyrrolidone. One of the above organic solvents may be singularly used, or two or more of the above may be used together.

Coating-film Formation Application Liquid Containing Titanium Oxide Particles

A matrix formation component is optionally added to the dispersion solution containing the titanium oxide particles of the invention to form a coating-film formation application liquid. A matrix formation component used in a typical coating-film formation application liquid is usable as the matrix formation component. Examples of the matrix formation component include tetramethoxysilane, tetraethoxysilane, methyltrimethoxysilane, ethyltriethoxysilane, methyltriethoxysilane, phenyltriethoxysilane, dimethyldimethoxysilane, phenylmethyldimethoxysilane, vinyltrimethoxysilane, vinyltriethoxysilane, vinyltris($\beta$-methoxyethoxy)silane, $\gamma$-glycidoxypropyltrimethoxysilane, $\gamma$-glycidoxypropyltriethoxysilane, $\gamma$-glycidoxypropylmethyldimethoxysilane, $\gamma$-glycidoxypropylmethyldiethoxysilane, $\beta$-(3,4-epoxycyclohexyl)ethyltrimethoxysilane, $\gamma$-methacryloxypropyltrimethoxysilane, N-$\beta$(aminoethyl)$\gamma$-aminopropyltrimethoxysilane, N-$\beta$(aminoethyl)$\gamma$-aminopropylmethyldimethoxysilane, $\gamma$-aminopropyltriethoxysilane, N-phenyl-$\gamma$-aminopropyltrimethoxysilane, and $\gamma$-mercaptopropyltrimethoxysilane. One of the above matrix formation components may be singularly used, or two or more of the above may be used together.

Substrate with Coating Film Containing Titanium Oxide Particles

The dispersion solution containing the titanium oxide particles of the invention is used to form a coating film on various substrates (e.g. glass, plastic, or the like) to provide a substrate with a coating film. The substrate with a coating film is usable as a substrate for an optical component such as an optical lens (e.g. a spectacle lens and a camera lens), a front plate for an optical display, a case of a show window, a window glass, a contact glass plate for a copier, a light cover for an automobile, and various ultraviolet-blocking filters. The titanium oxide particles of the invention, which are low in photocatalytic activity and nevertheless exhibit UV absorption ability, can provide a coating film with high weather resistance in any applications. The film thickness is not specifically limited. However, since the titanium oxide particles of the invention are not easily colored, the coating film is less likely to be colored even when the film thickness is increased. Especially, in order to achieve a certain strength for the coating film (for instance, based on evaluation by Bayer test), the film thickness is preferably 0.5 $\mu$m or more, more preferably 1 $\mu$m or more, and still more preferably 2 $\mu$m or more. The upper limit of the film thickness, which is not specifically limited, is optionally 100 $\mu$m or less, 50 $\mu$m or less, or 30 $\mu$m or less.

Producing Method of Titanium Oxide Particle

The titanium oxide particles of the invention can be prepared by, for instance, a producing method including the following steps (1) to (3). It should be noted that the producing method of the titanium oxide particles of the invention is not limited to the producing method described below.

(1) Coprecipitated gel preparation step (2) Step for preparing precursor for hydrothermal-processing (3) Hydrothermal-processing step

The method for preparing the titanium oxide particles of the invention will be detailed below.

(1) Coprecipitated Gel Preparation Step

In this step, an aqueous solution containing Ti, Fe, and Zr is neutralized to prepare coprecipitated gel containing Ti, Fe, and Zr. The coprecipitated gel containing Ti, Fe, and Zr is prepared to promote dissolution of Fe and Zr in finally obtained rutile titanium oxide to form a solid solution.

The aqueous solution containing Ti, Fe, and Zr can be prepared by dissolving respective source materials for Ti, Fe, and Zr in water. Any typically known Ti source material such as titanium tetrachloride, titanium sulfate, and titanium alkoxide is usable. Any typically known Fe source material such as iron chloride, iron sulfate, iron nitrate, and iron acetate is usable. Any typically known Zr source material such as zirconium chloride, zirconium carbonate, and zirconium nitrate is usable. The pH of the aqueous solution containing Ti, Fe, and Zr is preferably 3 or less.

In this step, an alkali with pH of 10 or more is usable in order to neutralize the above-described aqueous solution. For instance, an alkaline aqueous solution, in which sodium hydroxide, potassium hydroxide, ammonia or the like is dissolved in water, is usable. Coprecipitated gel containing Ti, Fe, and Zr is generated by mixing the above aqueous solution and the alkaline aqueous solution until pH falls in a range from 4 to 10. The coprecipitated gel, which can be collected by filtration, is optionally washed with water or the like as necessary.

(2) Step for Preparing Precursor for Hydrothermal-processing

In this step, the coprecipitated gel obtained in the above step is re-dispersed (deflocculated) in water to prepare a precursor for hydrothermal-processing.

Any typically known method for deflocculating the coprecipitated gel is usable. For instance, the coprecipitated gel is optionally dispersed in water and subjected to an ultrasonic treatment, or is dispersed in water using acid or alkali. Further optionally, the coprecipitated gel is deflocculated with hydrogen peroxide water. At this time, it is preferable that the amount of water is adjusted so that a concentration of the solid content in the finally obtained precursor for hydrothermal-processing becomes 10 mass% or less.

The average particle size of the solid content contained in the precursor for hydrothermal-processing obtained in this step is preferably in a range from 5 nm to 50 nm, more preferably in a range from 10 nm to 40 nm, and still more preferably in a range from 15 nm to 30 nm. When the average particle size of the solid content contained in the coprecipitated gel aqueous dispersion is enlarged, the average particle size of the finally obtained rutile titanium oxide is also likely to be enlarged. Accordingly, it is preferable that the average particle size of the solid content contained in the coprecipitated gel dispersion solution is adjusted to become close to the average particle size of the rutile titanium oxide particles of the invention.

In this step, after deflocculating the coprecipitated gel, specific elemental component(s) is optionally added. For instance, a material containing element(s) such as Sn, Si, and/or Al is optionally added. The material is preferably water-soluble. When the material is not water-soluble, the material is preferably in a form of a dispersal system (e.g.

sol) where minute particles are dispersed. At this time, when a salt containing alkaline metal, alkaline earth metal, and/or the like is used as the material, it is preferable that the alkaline metal and/or alkaline earth metal is removed using a cation exchange resin or the like after dissolving the material.

(3) Hydrothermal-processing Step

In this step, the precursor for hydrothermal-processing obtained in the above-described step is subjected to hydrothermal-processing to prepare the rutile titanium oxide particles in which Fe and Zr are dissolved to form a solid solution.

In this step, the precursor for hydrothermal-processing can be subjected to hydrothermal-processing using a typically known apparatus such as an autoclave. The temperature for the hydrothermal-processing is preferably in a range from 100 degrees C to 250 degrees C, more preferably in a range from 120 degrees C to 220 degrees C, and still more preferably in a range from 130 degrees C to 210 degrees C. The time for keeping the precursor in the above temperature range is preferably in a range from 1 hour to 48 hours, more preferably in a range from 5 hours to 24 hours, and still more preferably in a range from 10 hours to 20 hours.

The rutile titanium oxide of the invention, which is contained in the liquid after being subjected to the hydrothermal-processing, is optionally separated and/or washed as necessary. The separated rutile titanium oxide is optionally calcined to enhance crystallinity thereof.

The coating layer (if present) on the titanium oxide particles of the invention is optionally formed according to, for instance, the process disclosed in JP 2009-155496 A. When the titanium oxide particles of the invention are dispersed in an organic solvent or in a solution in which a resin is dispersed, the surface of the titanium oxide particles or the surface of the coating layer is optionally hydrophobized (surface treated) using the process disclosed in the above JP 2009-155496 A.

Producing Method of Dispersion Solution Containing Titanium Oxide Particles

The dispersion solution containing the titanium oxide particles of the invention can be prepared by dispersing the titanium oxide particles of the invention in a solvent. Any typically known method for dispersing the titanium oxide particles in a solvent is usable. For instance, when the titanium oxide particles of the invention are powdery, the dispersion solution can be prepared by applying dispersion treatment (e.g. bead milling, ultrasonic treatment, or the like) to the titanium oxide particles added in water, an organic solvent or the like. At this time, the titanium oxide particles of the invention can be more easily dispersed in the solvent when the concentration of the solid content in the dispersion solution is set at 10 mass% or less. Further, the zeta potential of the titanium oxide particles of the invention is optionally measured and the pH is optionally adjusted to be within a range suitable for dispersion.

When an organic solvent is used as the solvent for the dispersion solution containing the titanium oxide particles of the invention, examples of the organic solvent include: alcohols such as methanol, ethanol, ethylene glycol, 1-propanol, 2-propanol, 1-butanol, 2-butanol, and octanol; esters such as ethyl acetate, butyl acetate, ethyl lactate, propylene glycol monomethylether acetate, propylene glycol monoethylether acetate, and $\gamma$-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methylethyl ketone, methylisobutyl ketone, acetyl acetone, and cyclohexanone; aromatic hydrocarbons such as benzene, toluene, xylene, and ethylbenzene; cyclic hydrocarbons such as cyclohexane; and amides such as dimethyl formamide, N,N-dimethyl acetoacetamide, and N-methylpyrrolidone. One of the above organic solvents may be singularly used, or two or more of the above may be used together.

Producing Method of Coating-film Formation Application Liquid Containing Titanium Oxide Particles

The coating-film formation application liquid containing the titanium oxide particles of the invention can be prepared using the titanium oxide particles of the invention by a typically known method. For instance, components necessary for forming the coating film are optionally added to the above dispersion solution to prepare the application liquid. The coating-film formation application liquid may be a thermally-curable coating-film formation application liquid or a photo-curable coating-film formation application liquid.

The thermally-curable coating-film formation application liquid can be prepared by adding a matrix component and, as necessary, a curing catalyst for heat curing, additive(s) and/or the like in the dispersion solution containing the titanium oxide particles of the invention. For instance, the application liquid can be produced according to the disclosure of JP 2000-204301 A.

The photo-curable coating-film formation application liquid can be prepared by adding a matrix component and, as necessary, a curing catalyst for photo-curing, additive(s) and/or the like in the dispersion solution containing the titanium oxide particles of the invention. For instance, the application liquid can be produced according to the disclosure of JP 2009-056387 A.

Examples of usable matrix component(s) include tetramethoxysilane, tetraethoxysilane, methyltrimethoxysilane, ethyltriethoxysilane, methyltriethoxysilane, phenyltriethoxysilane, dimethyldimethoxysilane, phenylmethyldimethoxysilane, vinyltrimethoxysilane, vinyltriethoxysilane, vinyltris($\beta$-methoxyethoxy)silane, $\gamma$-glycidoxypropyltrimethoxysilane, $\gamma$-glycidoxypropyltriethoxysilane, $\gamma$-glycidoxypropylmethyldimethoxysilane, $\gamma$-glycidoxypropylmethyldiethoxysilane, $\beta$-(3,4-epoxycyclohexyl)ethyltrimethoxysilane, $\gamma$-methacryloxypropyltrimethoxysilane, N-$\beta$(aminoethyl)$\gamma$-aminopropyltrimethoxysilane, N-$\beta$(aminoethyl)$\gamma$-aminopropylmethyldimethoxysilane, $\gamma$-aminopropyltriethoxysilane, N-phenyl-$\gamma$-aminopropyltrimethoxysilane, and $\gamma$-mercaptopropyltrimethoxysilane. One of the above matrix component(s) may be singularly used, or two or more of the above may be used together.

Examples of a usable curing catalyst for heat curing include: amines such as n-butylamine, triethylamine, guanidine, and biguanizide; amino acids such as glycine; metal acetyl acetonate such as aluminum acetyl acetonate, chromium acetyl acetonate, titanyl acetyl acetonate, and cobalt acetyl acetonate; metal salts of an organic acid such as sodium acetate, zinc naphthenate, cobalt naphthenate, zinc octylate, and tin octylate; perchrolic acids and salts thereof such as perchloric acid, ammonium perchlorate, and magnesium perchlorate; acids such as hydrochloric acid, phosphoric acid, nitric acid, and p-toluenesulfonic acid; and Lewis acids in a form of a metal chloride such as $SnCl_2$, $AlCl_3$, $FeCl_3$, $TiCl_4$, $ZnCl_2$, and $SbCl_3$. One of the above curing catalyst(s) may be singularly used, or two or more of the above may be used together.

Examples of a usable curing catalyst for photo-curing include bis(2,4,6-trimethylbenzoyl)phenylphosphine oxide, bis(2,6-dimethoxybenzoyl)-2,4,4-trimethyl-pentylphosphine oxide, 2-hydroxy-methyl-2-methyl-phenyl-propane-1-ketone, 2,2-dimethoxy-1,2-diphenylethan-1-one, 1-hydroxy-cyclohexyl-phenyl-ketone, and 2-methyl-1-[4-(methylthio)phenyl]-2-morpholinopropan-1-one. One of the above curing catalyst(s) may be singularly used, or two or more of the above may be used together.

Examples of the additive include a surfactant, leveling agent, UV absorber, light stabilizer, dilution solvent, preservative, antifoulant, antibacterial agent, antifoaming agent, UV degradation inhibitor, and dye. One of the above additive(s) may be singularly used, or two or more of the above may be used together.

Producing Method of Substrate with Coating Film Containing Titanium Oxide Particles

The substrate with a coating film containing the titanium oxide particles of the invention can be prepared using a substrate and the above coating-film formation application liquid by a typically known method.

Examples of the substrate include various substrates such as glass and plastic. Specific example of the substrate is a plastic substrate usable as an optical lens and the like.

The thickness of the coating film formed on the substrate is, though being different depending on the usage of the substrate with a coating film, preferably 0.5 $\mu$m or more, more preferably 1 $\mu$m or more, and still more preferably 2 $\mu$m or more in order to achieve a strength for the coating film (for instance, based on evaluation by Bayer test). The upper limit of the film thickness, which is not specifically limited, is optionally 100 $\mu$m or less, 50 $\mu$m or less, or 30 $\mu$m or less.

The substrate with a coating film containing the titanium oxide particles of the invention can be produced using the above thermally-curable coating-film formation application liquid according to, for instance, the disclosure of JP 2000-204301 A. Meanwhile, the photo-curable coating-film formation application liquid can be produced according to, for instance, the disclosure of JP 2009-56387 A. The substrate with a coating film can be prepared by applying the coating-film formation application liquid on a substrate by a typically known process (e.g. dipping process, spraying process, spinner process, roll coating process, or bar coater process), drying the liquid, and curing the liquid by heating, UV irradiation, or the like.

When the substrate with a coating film according to the invention is to be produced, in order to enhance adhesiveness between the substrate (e.g. a plastic substrate) and the coating film, the surface of the substrate is optionally treated with alkali, acid, or surfactant, polished by inorganic or organic particles, and/or subjected to primer or plasma treatment.

Examples

The invention will be described below in further details with reference to Examples. It should however be noted that the scope of the invention is by no means limited by these Examples.

Measurement Method or Evaluation Method

The various measurements or evaluations were performed as follows.

[1] Average Particle Size

The shape of a measurement sample was observed using a scanning electron microscope (SEM) (produced by Hitachi High-Technologies Corporation, S-5500) at a 30 kV acceleration voltage. The sample to be observed was prepared as follows. After diluting aqueous dispersion sol of the measurement sample with water so that the solid content concentration became 0.05 mass%, the aqueous dispersion sol was applied on a metal grid with a collodion film (produced by Okenshoji Co., Ltd.). Then, the sol was irradiated with infrared ray using a 250 W infrared lamp for 30 minutes to evaporate the solvent, thereby forming the sample to be observed. After taking an SEM image of the sample, sizes of 100 primary particles were measured with a caliper gauge, which were averaged to calculate the average particle size. It should be noted that, when the shape of particles was anisotropic, the length of the major axis of each of the particles was determined to be the particle size.

[2] Solid Content Concentration

After removing the solvent contained in the measurement sample through infrared irradiation or the like, the residue was calcined at 1000 degrees C for an hour to obtain an ignition residue (solid content). The solid content concentration was determined as a ratio of the mass of the ignition residue to the mass of the sample.

[3] Measurement Method of Particle Composition

Titanium, Tin, Silicon, Iron, and Antimony

Aqueous dispersion of a measurement sample (inorganic oxide particles such as titanium oxide particles), which was put into a zirconia crucible, was irradiated with infrared ray to remove water content and was heated and melted after adding $Na_2O_2$ and NaOH to the obtained dry substance. Sulfuric acid and hydrochloric acid were added to the obtained melted substance and was further added with water for dilution.
The amounts of titanium, tin, silicon, iron, and antimony in the obtained solution were measured in oxide equivalents thereof ($TiO_2$, $SnO_2$, $SiO_2$, $Fe_2O_3$ and $Sb_2O_5$) using an ICP device (produced by Shimadzu Corporation, ICPS-8100).

Zirconium, Molybdenum, Aluminum

Aqueous dispersion of a measurement sample, which was put into a platinum dish, was heated after being added with hydrofluoric acid and sulfuric acid and then was added with water to dissolve the inorganic oxide particles. Then, after diluting the solution with water, the amounts of zirconium, molybdenum, and aluminum were measured in oxide equivalents thereof ($ZrO_2$, MoOs, and $Al_2O_3$) using an ICP device (produced by Shimadzu Corporation, ICPS-8100).

Potassium

Aqueous dispersion of a measurement sample, which was put into a platinum dish, was heated after being added with hydrofluoric acid and sulfuric acid and then was added with hydrochloric acid to dissolve the solid content. Then, after diluting the solution with water, the amount of potassium was measured in an oxide equivalent thereof ($K_2O$) using an atomic absorption photometer (produced by Hitachi, Ltd., Z-5300).

[4] Crystal Structure Analysis of Particles

2 g (solid content) of aqueous dispersion of a measurement sample, which was put into a porcelain crucible (type B-2), was dried at 110 degrees C for 12 hours and the residue was put into a dessicator to be cooled to a room temperature. Next, the residue and a small amount of strontium titanate (produced by Chemical Lab. Co., Ltd.) were mixed and pulverized for 15 minutes. Subsequently, the pulverized substance was subjected to X-ray diffraction measurement using an X-ray diffractometer SmartLab (produced by Rigaku Corporation). Peak position, which was identified on an obtained diffraction pattern using a software PDXL2 version 2.7.2.0, was corrected so that a peak (2θ) derived from a (110) plane of strontium titanate mixed in a small amount was at 32.374 deg. Details of the measurement conditions and data analysis were as follows.

Measurement Conditions

Measurement machine: particle X-ray diffractometer SmartLab (produced by Rigaku Corporation)

X-ray generator: 9 kW open tube (Cu K$\alpha$-ray source, voltage 45 kV, current 200 mA)

Soller/PSC: 5.0 deg

IS longitudinal dimension: 10.0 mm

PSA: none

Soller: 5.0 deg

IS: 1/2

RS1: 13 mm

RS2: 20 mm

Scan step: 0.02 deg

Scan range: 5 to 70 deg

Scan speed: 5 deg/min

X-ray detector: high-speed one-dimensional X-ray detector (D/TeX Ultra 250)

Measurement atmosphere: atmospheric air

Sample platform: sample holder made of $Al_2O_3$ (without bottom)

Data Analysis

Analysis software: integrated powder X-ray analysis software PDXL2 Version 2.7.2.0 (produced by Rigaku Corporation)
Smoothing: smoothing by B-Splne (X threshold 1.5)
Background removal: fitting method
K$\alpha$2 removal: intensity ratio 0.497
Peak search: quadratic differential, $\sigma$ cut value = 3, a cut range 0.5 to 20.0
Profile fitting method: fitting on measurement data
Profile fitting peak shape: split pseudo-Voigt function

[5] Evaluation on Effect for Restraining Photocatalytic Activity of Titanium Oxide Particles (Measurement of Discoloration Speed)

An appropriate amount of solvent was added to the dispersion solution of titanium oxide particles so that mass concentration of Ti (in a $TiO_2$ equivalent) became 0.335% and water/methanol = 1/1 (mass ratio) was satisfied. Subsequently, the obtained dispersion solution and a glycerin solution of a sunset yellow FCF dye (solid content concentration 0.02 mass%) were mixed so that the mass ratio (mass of the dispersion solution/mass of the glycerin solution) became 1/3 to prepare a sample, which was put into a quartz cell (depth: 1 mm, width: 1 cm, height: 5 cm). Subsequently, a surface (width 1 cm $\times$ height 5 cm) of the quartz cell was irradiated with ultraviolet ray using an ultraviolet lamp (produced by AS ONE Corporation, LUV-6) whose wavelength range was set at I line (wavelength 365 nm) at a distance adjusted so that the strength became 0.4 mW/cm$^2$ (in terms of 365 nm wavelength).

An absorbance ($A_0$) of the sample before ultraviolet irradiation and an absorbance ($A_n$) of the sample after ultraviolet irradiation at a wavelength of 490 nm for n hours were measured by an ultraviolet-visible spectrophotometer (produced by JASCO Corporation, V-550). Then, the discoloration rate (SY discoloration rate) of the dye after UV irradiation for three hours was calculated according to a formula below.

$$\text{Discoloration rate} = (A_n - A_0)/A_0 \times 100\ (\%)$$

[6] Measurement Method of Thickness of Coating Film and Refractive index

Reflectance spectrum of the coating film and coated substrate were measured using an optical measuring device (produced by OLYMPUS CORPORATION, USPM-RU III) to calculate the thickness and refractive index of the coating film.

[7] Measurement Method of Refractive Index of Particles

According to the method described in [0105] to [0110] of JP 2010-168266 A, a plurality of coating films with different ratios of titanium oxide particles to a matrix were prepared and the refractive index of each of the coating films was calculated according to the above-described method to calculate the refractive index of the particles.

[8] Evaluation on Weather Resistance of Thermally Cured Coating Film

A weathering test was performed on a substrate with a thermally cured coating film using a weathering tester (produced by Q-Lab Corporation: ultraviolet fluorescence lamp accelerated weathering tester QUV) to evaluate a time until cracks were visually observed. The weathering test was performed for one cycle (12 hours) of the following steps 1, 2, and 3 to visually observe the presence of cracks.

Weathering Test Conditions

Step 1: UV irradiation (light source: UVA-340, radiation intensity: 0.70 W/m$^2$, temperature: 60 degrees C, time: 8 hours)
Step 2: dew condensation (light source: none, temperature: 50 degrees C, time: 4 hours)
Step 3: return to Step 1

Evaluation Method

Environment: 10 lux or less observation method: laterally irradiating the substrate with the thermally cured coating film using an LED light to visually observe the presence of cracks

[9] Evaluation on Coloration of Titanium Oxide Particles (YI Value)

Aqueous dispersion of titanium oxide particles, which was adjusted so that solid content concentration became 5 mass%, was put into a quartz cell having an optical length of 10 mm. Then, the absorption spectrum was measured by an ultraviolet-visible spectrophotometer (produced by JASCO Corporation, V-750) and converted to an XYZ color system in the standard illuminant D65. Based on the XYZ color system, the YI value was calculated according to a formula below in accordance with the method for calculating the YI value using the standard illuminant D65 in the XYZ color system as defined in JIS K7373: 2006.

$$YI = 100(1.2985X - 1.1335Z)/Y$$

[10] Bayer Test

Abrasion tester BTE (produced by COLTS Laboratories) and haze value measurement machine (produced by NIPPON DENSHOKU INDUSTRIES Co., Ltd., NDH5000) were used to calculate a Bayer value based on a change in haze values of a plastic lens substrate (later-described test piece, which is sometimes referred to as "to-be-tested lens" hereinafter) and a standard lens. The used standard lens was CR-39 (diethylene glycol bisallyl carbonate, using monomers produced by PPG Industries, Inc., refractive index of substrate: 1.50), which was a commercially available plastic lens substrate.

Specifically, the haze value of each of the lenses was measured, where an initial haze value of the standard lens was defined as D(std0) and an initial haze value of the to-be-tested lens was defined as D(test0). After each of the lenses was placed on a pan of the abrasion tester, 500 g dedicated sand (Kryptonite $\beta$) was put on the lenses and the pan was shaken in right and left directions at 150 times/min for four minutes (total 600 times). Haze values of the lenses after shaking were measured, where the haze value of the standard lens was defined as D(stdf) and the haze value of the to-be-tested lens was defined as D(testf). The Bayer test value (R) was calculated according to a formula below.

$$R = [D(stdf) - D(std0)]/[D(testf) - D(test0)]$$

Example 1: Preparation of Rutile Titanium Oxide Particles

(1) Coprecipitated Gel Preparation Step

A 668 g titanium tetrachloride aqueous solution (produced by OSAKA Titanium technologies Co.,Ltd.) containing 7.75 mass% of Ti in a $TiO_2$ equivalent, a 6.03 g aqueous solution of ferric chloride (produced by TOAGOSEI CO., LTD., high-grade iron) containing 7.75 mass% of Fe in an $Fe_2O_3$ equivalent, 54.7 g zirconium oxychloride (produced by TAIYO KOKO CO., LTD.) containing 7.75 mass% of Zr in a $ZrO_2$ equivalent, and ammonia water containing 15 mass% ammonia (produced by Ube Industries, Ltd.) were mixed to prepare a white slurry of pH 9.5. Then, after filtrating the slurry, a filter cake was washed with water to obtain 560 g coprecipitated gel, which had a solid content concentration of 10 mass% and contained Fe, Zr, and Ti.

(2) Step for Preparing Precursor for Hydrothermal-processing

After being added with 1145 g water and 347 g hydrogen peroxide water (produced by Mitsubishi Gas Chemical Company, Inc.) containing 35 mass% hydrogen peroxide, the coprecipitated gel (202 g) obtained in the above step was agitated at 80 degrees C for an hour and then was further added with 328 g water to obtain a 2020 g deflocculant of the coprecipitated gel. The deflocculant was yellowish and transparent and had pH of 8.5. The average particle size of the particles in the deflocculant (a value calculated based on particle size distribution data obtained with a use of a dynamic scattering method by a measurement machine (produced by Otsuka Electronics Co., Ltd., ELS-Z) using a cumulant analysis) was 25 nm.

After being mixed with a cation exchange resin (produced by Mitsubishi Chemical Corporation), the deflocculant (2020 g) was gradually added with a 273 g potassium stannate aqueous solution containing 1 mass% potassium stannate (produced by Showa Kako Corp.) in an $SnO_2$ equivalent while being agitated.

After separating the cation exchange resin contained in the obtained deflocculant, 32.5 g silica sol (average particle size 16 nm (a value measured by a dynamic scattering method), specific surface area 375 $m^2/g$, pH 2.2, solid content concentration 16 mass%: prepared with reference to a method described in Example 1 ("Preparation of Silica Sol") of JP 2009-197078 A) containing 0.4 mass% aluminum in an $Al_2O_3$ equivalent and 508 g water were mixed to prepare a precursor for hydrothermal-processing.

(3) Hydrothermal-processing Step

The precursor for hydrothermal-processing obtained in the above step was heated in an autoclave (produced by Taiatsu Techno Corporation, 5L) at 165 degrees C for 18 hours. The heated precursor was cooled to a room temperature to collect a sol reactant. The reactant was condensed by an ultrafiltration membrane device (produced by Asahi Kasei Corporation, SIP-1013, SIP-0013) to obtain a 270 g aqueous dispersion sol whose solid content concentration was 10 mass%.

The particles contained in the obtained aqueous dispersion sol were titanium oxide particles having the rutile crystal structure and containing iron, zirconium, tin, silicon, aluminum, and potassium. The composition (Ti content (in a $TiO_2$ equivalent), content of added element(s) (mol% with respect to Ti), Zr/Fe mol ratio), physical properties and evaluation results of of the titanium oxide particles are shown in Table 1. It should be noted that, supposing that the added elements were iron, zirconium, tin, and silicon, the calculated contents of the added elements were 0.07 mol% (Fe), 4.0 mol% (Zr), 5.3 mol% (Sn), and 19.7 mol% (Si).

Example 1: Preparation of Coating-film Formation Paint

Ammonia water containing 15 mass% ammonia was gradually added to a 2.63 kg zirconium oxychloride aqueous solution containing 2 mass% zirconium oxychloride (produced by TAIYO KOKO CO., LTD.) in a $ZrO_2$ equivalent while agitating the solution to obtain a slurry of pH 8.5. Subsequently, the solid content obtained by filtrating the slurry was washed with water to obtain a 526 g zirconia cake containing 10 mass% zirconia in a $ZrO_2$ equivalent.

To the cake of 20 g, 180 g water and, further, 4.0 g potassium hydroxide powder (produced by KANTO CHEMICAL CO., INC.) containing 85 mass% potassium hydroxide were added to alkalize the system. Subsequently, the cake was added with 40 g hydrogen peroxide water containing 35 mass% hydrogen peroxide and was heated to 50 degrees C to melt the cake. Then, 156 g water was added to obtain a 400 g zirconate peroxide aqueous solution containing 0.5 mass% zirconium in a $ZrO_2$ equivalent. The pH of the zirconate peroxide aqueous solution was 12.9.

Aqueous dispersion sol containing the titanium oxide particles obtained in the above step was diluted with water to prepare 700 g sol whose solid content concentration was 2 mass%. A 196 g zirconate peroxide aqueous solution obtained in the above step was added to the sol at a room temperature and was agitated to obtain a zirconate peroxide aqueous solution mixture.

The zirconate peroxide aqueous solution mixture obtained in the above step was subjected to a heat treatment at 60 degrees C for six hours and was then cooled to a room temperature. After diluting the solution with water so that the solid content concentration became 0.1 mass%, the solution was subjected to hydrothermal-processing in an autoclave at 165 degrees C for 18 hours. After taking out the reactant, the reactant was condensed by an ultrafiltration membrane device (produced by Asahi Kasei Corporation, SIP-1013, SIP-0013) to obtain 145 g aqueous dispersion of zirconia-coated titanium oxide particles whose solid content concentration was 10 mass%.

The aqueous dispersion (140 g) obtained in the above step was added to an agitated methanol solution of 10.7 g tetraethoxysilane (surfactant: produced by TAMA CHEMICALS CO., LTD.). Subsequently, after heating the obtained mixture liquid at 50 degrees for six hours, the mixture liquid was cooled to a room temperature. Then, the dispersion medium (water) in the mixture liquid was substituted by methanol using an ultrafiltration membrane device (produced by Asahi Kasei Corporation, SIP-0013) and was further condensed to obtain a methanol dispersion solution whose solid content concentration was 20 mass%.

While agitating the 6.63 g methanol dispersion solution obtained in the above step, 1.97 g purified water and 3.02 g γ-glycidoxypropyltrimethoxysilane (produced by Momentive Performance Materials Japan LLC) were added. The mixture was further agitated at a room temperature for an hour to perform co-hydrolysis of the methanol dispersion solution and γ-glycidoxypropyltrimethoxysilane.

Subsequently, the mixture liquid, which was added with 6.92 g propyleneglycol monomethylether (produced by Dow Chemical Japan Limited), 0.071 g acetylacetone aluminum (produced by KISHIDA CHEMICAL CO., LTD.), and 0.071 g silicone surfactant (leveling agent: produced by Dow Corning Toray Co., Ltd., L-7001), was agitated at a room temperature for an hour and was then kept still at a room temperature for 48 hours. A thermally-curable coating-film formation paint was thus prepared.

Example 1: Preparation of Substrate with Coating Film

Preprocessing of Plastic Lens Substrate

A necessary number of commercially available plastic lens substrates (monomer name "MR-8", produced by Mitsui Chemicals, Inc.) were prepared and immersed in an NaOH aqueous solution of 8 mass% concentration, which was kept at 40 degrees C, for 10 minutes to be etched. The lens substrates were taken out, water-washed, and then were sufficiently dried.

Preparation of Substrate with Thermally Cured Coating Film

The thermally-curable coating-film formation paint obtained in the above step was applied on a surface of the plastic lens substrates obtained in the above step to form a coating film. The paint was applied by spin coating, where conditions were adjusted so that the film thickness after being cured became 2.5 μm. The coating film was subjected to thermal treatment at 80 degrees C for 10 minutes and subsequently at 120 degrees for an hour to be cured, thereby producing a substrate with a thermally cured coating film. Evaluation results of the substrate with a thermally cured coating film are shown in Table 1.

Example 2

Aqueous dispersion sol was produced in the same manner as Example 1 except that a 17.7 g ferric chloride aqueous solution was added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 3

Aqueous dispersion sol was produced in the same manner as Example 1 except that a 60.3 g aqueous solution of ferric chloride (produced by TOAGOSEI CO., LTD., high-grade iron) was added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 4

Aqueous dispersion sol was produced in the same manner as Example 1 except that a 106 g aqueous solution of ferric chloride (produced by TOAGOSEI CO., LTD., high-grade iron) was added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 5

Aqueous dispersion sol was produced in the same manner as Example 3 except that, in the (2) step for preparing the precursor for hydrothermal-processing in preparing the rutile titanium oxide particles, a 205 g potassium stannate aqueous solution containing 1 mass% potassium stannate (produced by Showa Kako Corp.) in an $SnO_2$ equivalent was added to the deflocculant (2020 g). Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 6

Aqueous dispersion sol was produced in the same manner as Example 3 except that, in the (2) step for preparing the precursor for hydrothermal-processing in preparing the rutile titanium oxide particles, a 410 g potassium stannate aqueous solution containing 1 mass% potassium stannate (produced by Showa Kako Corp.) in an $SnO_2$ equivalent was added to the deflocculant (2020 g). Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 7

Aqueous dispersion sol was produced in the same manner as Example 1 except that the amount of zirconium oxychloride (produced by TAIYO KOKO CO., LTD.) containing 7.75 mass% Zr in a $ZrO_2$ equivalent was changed to 5.47 g in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 8

Aqueous dispersion sol was produced in the same manner as Example 1 except that the amount of zirconium oxychloride (produced by TAIYO KOKO CO., LTD.) containing 7.75 mass% Zr in a $ZrO_2$ equivalent was changed to 9.30 g in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 9

Aqueous dispersion sol was produced in the same manner as Example 1 except that the amount of zirconium oxychloride (produced by TAIYO KOKO CO., LTD.) containing 7.75 mass% Zr in a $ZrO_2$ equivalent was changed to 27.4 g in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 10

Aqueous dispersion sol was produced in the same manner as Example 1 except that the amount of zirconium oxychloride (produced by TAIYO KOKO CO., LTD.) containing 7.75 mass% Zr in a $ZrO_2$ equivalent was changed to 82.1 g in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 11

Aqueous dispersion sol was produced in the same manner as Example 3 except that, in the (2) step for preparing the precursor for hydrothermal-processing in preparing the rutile titanium oxide particles, a 1483 g potassium stannate aqueous solution containing 1 mass% potassium stannate (produced by Showa Kako Corp.) in an $SnO_2$ equivalent was added to the deflocculant (809 g). Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 12

Aqueous dispersion sol was produced in the same manner as Example 3 except that, in the (2) step for preparing the precursor for hydrothermal-processing in preparing the rutile titanium oxide particles, a 1943 g potassium stannate aqueous solution containing 1 mass% potassium stannate (produced by Showa Kako Corp.) in an $SnO_2$ equivalent was added to the deflocculant (353 g). Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 1.

Example 13

A substrate with a thermally cured coating film was produced in the same manner as Example 3 except that the added amount of silica sol (average particle size 16 nm (a value measured by a dynamic scattering method), specific surface area 375 m$^2$/g, pH 2.2, solid content concentration 16 mass%: prepared with reference to a method described in Example 1 ("Preparation of Silica Sol") of JP 2009-197078 A) containing 0.4 mass% aluminum in an Al$_2$O$_3$ equivalent was changed to 24.8 g and the added amount of water was changed to 388 g in the (2) step for preparing the precursor for hydrothermal-processing in preparing the rutile titanium oxide particles in Example 3. Evaluation results of the substrate with a thermally cured coating film are shown in Table 1.

Example 14

A substrate with a thermally cured coating film was produced in the same manner as Example 3 except that the added amount of silica sol (average particle size 16 nm (a value measured by a dynamic scattering method), specific surface area 375 m$^2$/g, pH 2.2, solid content concentration 16 mass%: prepared with reference to a method described in Example 1 ("Preparation of Silica Sol") of JP 2009-197078 A) containing 0.4 mass% aluminum in an Al$_2$O$_3$ equivalent was changed to 53.8 g and the added amount of water was changed to 841 g in the (2) step for preparing the precursor for hydrothermal-processing in preparing the rutile titanium oxide particles in Example 3. Evaluation results of the substrate with a thermally cured coating film are shown in Table 1.

Example 15

A substrate with a thermally cured coating film was produced in the same manner as Example 3 using the thermally-curable coating-film formation paint produced as in Example 3 except that the conditions for spin coating were adjusted so that the film thickness after being cured became 0.1 $\mu$m. Evaluation results of the substrate with a thermally cured coating film are shown in Table 1.

Comparative 1

A substrate with a thermally cured coating film was produced in the same manner as Example 1 except that titanium oxide particles (titanium(IV) oxide, rutile, -5 $\mu$m, 99.9% (produced by FUJIFILM Wako Pure Chemical Corporation)) were used in place of the titanium oxide particles used in Example 1. Evaluation results and the like of the titanium oxide particles and substrate with a thermally cured coating film are shown in Table 2.

Comparative 2

Aqueous dispersion sol was produced in the same manner as Example 1 except that a ferric chloride aqueous solution and zirconium oxychloride were not added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Comparative 3

Aqueous dispersion sol was produced in the same manner as Example 1 except that zirconium oxychloride was not added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Comparative 4

Aqueous dispersion sol was produced in the same manner as Example 1 except that zirconium oxychloride was not added and a 177 g ferric chloride aqueous solution was added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Comparative 5

Aqueous dispersion sol was produced in the same manner as Example 1 except that an aqueous solution of ferric chloride (produced by TOAGOSEI CO., LTD., high-grade iron) containing 7.75 mass% Fe in an $Fe_2O_3$ equivalent was not added in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Comparative 6

Aqueous dispersion sol was produced in the same manner as Example 1 except that a 109 g aqueous solution of molybdenum(V) chloride (produced by FUJIFILM Wako Pure Chemical Corporation) containing 7.75 mass% Mo in an MoOs equivalent was added without adding the ferric chloride (produced by TOAGOSEI CO., LTD., high-grade iron) in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Comparative 7

Aqueous dispersion sol was produced in the same manner as Example 1 except that 13.4 g antimony(III) chloride was added without adding an aqueous solution of ferric chloride (produced by TOAGOSEI CO., LTD., high-grade iron) in the (1) coprecipitated gel preparation step for preparing the rutile titanium oxide particles in Example 1. Composition, physical properties, and evaluation results of the particles contained in the obtained aqueous dispersion sol are shown in Table 1. Further, a substrate with a thermally cured coating film was produced in the same manner as in preparing the coating-film formation paint and the substrate with a thermally cured coating film in Example 1 except for the use of the above aqueous dispersion sol. Evaluation results of the substrate with a thermally cured coating film are shown in Table 2.

Table 1

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|---|
| Titanium Oxide Particles | Crystal Type | - | Rutile | Rutile | Rutile | Rutile | Rutile | Rutile | Rutile | Rutile | Rutile | Rutile | Rutile | Rutile | Rutile | Rutile | Rutile |
| | Interplanar Spacing of (110) Plane | nm | 0.3275 | 0.3275 | 0.3275 | 0.3275 | 0.3261 | 0.3294 | 0.3271 | 0.3272 | 0.3273 | 0.3276 | 0.3299 | 0.3322 | 0.3276 | 0.3274 | 0.3275 |
| | Average Particle Size | nm | 18 | 18 | 18 | 18 | 21 | 16 | 18 | 18 | 18 | 18 | 11 | 9 | 18 | 17 | 18 |
| | Ti Content (in $TiO_2$ Equivalent) | mass% | 68.4 | 68.3 | 67.8 | 67.3 | 70.3 | 64.3 | 72.9 | 72.4 | 70.4 | 64.5 | 27.0 | 11.7 | 70.0 | 62.1 | 67.8 |
| | Contents of Added Elements mol% (vs Ti) | Fe | 0.096 | 0.28 | 0.97 | 1.73 | 0.95 | 1.00 | 0.93 | 0.93 | 0.94 | 1.00 | 0.97 | 0.97 | 0.97 | 0.97 | 0.97 |
| | | Zr | 5.7 | 5.7 | 5.7 | 5.8 | 5.6 | 5.9 | 0.55 | 0.93 | 2.8 | 8.8 | 5.7 | 5.7 | 5.7 | 5.7 | 5.7 |
| | | Sn | 7.5 | 7.5 | 7.5 | 7.6 | 5.4 | 10.8 | 7.2 | 7.2 | 7.3 | 7.8 | 106.7 | 320.0 | 7.54 | 7.54 | 7.5 |
| | | Si | 27.8 | 27.9 | 28.1 | 28.3 | 27.1 | 29.5 | 26.1 | 26.2 | 26.9 | 29.3 | 70.4 | 162 | 21.4 | 46.5 | 28.1 |
| | | Al | 0.13 | 0.13 | 0.13 | 0.14 | 0.13 | 0.14 | 0.13 | 0.13 | 0.13 | 0.14 | 0.34 | 0.78 | 0.10 | 0.22 | 0.13 |
| | | K | 3.8 | 3.9 | 3.9 | 3.9 | 3.3 | 4.5 | 3.7 | 3.9 | 4.5 | 6.2 | 11.3 | 27.2 | 4.5 | 3.4 | 3.9 |
| | | Others | - | - | - | - | - | - | - | - | - | - | - | - | - | - | - |
| | Zr/Fe Ratio (mol) | - | 58.8 | 20.0 | 5.9 | 3.3 | 5.9 | 5.9 | 0.6 | 1.0 | 2.9 | 8.8 | 5.9 | 5.9 | 5.9 | 5.9 | 5.9 |
| | Refractive Index | - | 2.19 | 2.19 | 2.19 | 2.19 | 2.20 | 2.17 | 2.20 | 2.20 | 2.19 | 2.18 | 1.99 | 1.89 | 2.24 | 2.08 | 2.19 |
| | YI Value (conc.5%) | - | 42 | 45 | 51 | 54 | 52 | 49 | 51 | 51 | 51 | 52 | 50 | 48 | 51 | 50 | 51 |
| | SY Discoloration Rate (3 h) | % | 7.2 | 4.6 | 0.0 | 0.0 | 0.0 | 0.0 | 20.4 | 3.3 | 0.2 | 0.0 | 0.0 | 0.0 | 0.7 | 0.0 | 0.0 |
| Coating Layer | Element | | Zr | Zr | Zr | Zr | Zr | Zr | Zr | Zr | Zr | Zr | Zr | Zr | Zr | Zr | Zr |
| | Ratio | mass% | 6.5 | 6.5 | 6.5 | 6.5 | 6.5 | 6.5 | 6.5 | 6.5 | 6.5 | 6.5 | 6.5 | 6.5 | 6.5 | 6.5 | 6.5 |

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|---|
| Substrate with Coating Film | Time before Cracks Observed | hr | 72 | 96 | 144 | 192 | 120 | 168 | 60 | 108 | 120 | 144 | 168 | 192 | 96 | 168 | 192 |
| | Color Tone (Visual Appearance) | Transparent | ○ | ○ | ○ | ○ | ○ | ○ | ○ | ○ | ○ | ○ | ○ | ○ | ○ | ○ | ○ |
| | Film Thickness | μm | 2.4 | 2.4 | 2.5 | 2.4 | 2.5 | 2.6 | 2.4 | 2.5 | 2.5 | 2.6 | 2.5 | 2.6 | 2.5 | 2.5 | 0.1 |
| | Bayer Test | - | 1.8 | 1.8 | 1.9 | 1.9 | 1.9 | 1.9 | 1.9 | 1.9 | 1.9 | 1.9 | 1.9 | 1.9 | 1.9 | 1.9 | 1.0 |

EP 4 339 159 A1

Table 2

| Titanium Oxide Particles | | | Comp. 1 | Comp. 2 | Comp. 3 | Comp. 4 | Comp. 5 | Comp. 6 | Comp. 7 |
|---|---|---|---|---|---|---|---|---|---|
| | Crystal Type | - | Rutile | Rutile | Rutile | Rutile | Rutile | Rutile | Rutile |
| | Interplanar Spacing of (110) Plane | nm | 0.3248 | 0.3271 | 0.3271 | 0.3270 | 0.3275 | 0.3275 | 0.3276 |
| | Average Particle Size | nm | 1000 | 18 | 18 | 18 | 18 | 18 | 17 |
| | Ti Content (in $TiO_2$ Equivalent) | mass% | 100.0 | 75.1 | 74.3 | 72.4 | 69.1 | 68.0 | 67.3 |
| | Contents of Added Elements mol% (vs Ti) — Fe | | 0.00 | 0.00 | 0.98 | 3.55 | 0.00 | 0.00 | 0.00 |
| | Contents of Added Elements mol% (vs Ti) — Zr | | 0.00 | 0.00 | 0.00 | 0.00 | 5.65 | 5.55 | 5.71 |
| | Contents of Added Elements mol% (vs Ti) — Sn | | 0.00 | 6.28 | 6.34 | 6.50 | 6.79 | 7.33 | 7.54 |
| | Contents of Added Elements mol% (vs Ti) — Si | | 0.00 | 25.49 | 25.74 | 26.39 | 27.80 | 27.30 | 28.07 |
| | Contents of Added Elements mol% (vs Ti) — Al | | 0.00 | 0.12 | 0.12 | 0.13 | 0.13 | 0.13 | 0.13 |
| | Contents of Added Elements mol% (vs Ti) — K | | 0.00 | 3.60 | 3.87 | 3.97 | 3.85 | 3.85 | 3.82 |
| | Contents of Added Elements mol% (vs Ti) — Others | | - | - | - | - | - | Mo 0.97 | Sb 0.97 |
| | Zr/Fe Ratio (mol) | - | - | - | - | - | - | - | - |
| | Refractive index | - | 260 | 2.21 | 2.20 | 2.26 | 2.19 | 2.19 | 2.19 |
| | YI Value (conc.5%) | - | 18 | 32 | 51 | 59 | 31 | 30 | 31 |
| | SY Discoloration Rate (3 h) | % | 100.0 | 100.0 | 28.0 | 0.0 | 31.2 | 24.6 | 28.1 |
| Coating Layer | Element | | - | Zr | Zr | Zr | Zr | Zr | Zr |
| | Ratio | mass% | - | 6.5 | 6.5 | 6.5 | 6.5 | 6.5 | 6.5 |
| Substrate with Coating Film | Time before Cracks Observed | hr | 24 | 48 | 48 | 144 | 48 | 48 | 48 |
| | Color Tone (Visual Appearance) | Transparent | ×(white) | ○ | ○ | ×(brown) | ○ | ○ | ○ |
| | Film Thickness | μm | 2.5 | 2.4 | 2.5 | 2.4 | 2.5 | 2.6 | 2.4 |
| | Bayer Test | - | - | 1.8 | 1.8 | 1.9 | 1.8 | 1.8 | 1.8 |

The interplanar spacing of the (110) plane of the titanium oxide particles containing Fe and Zr according to Examples 1 to 6 is larger than that of the titanium oxide particles of Comparative 1 not containing Fe and Zr. Though exhibiting a similar YI value (i.e. the substrate with a coating film is less colored), Comparative 3, in which Fe is dissolved in titanium oxide to form a solid solution, exhibits a higher SY discoloration rate and lower weather resistance for the substrate with a coating film (i.e. cracks are generated in a shorter time) than in Examples 1 to 6, in which both of Fe and Zr are dissolved to form a solid solution. Comparative 4 with increased Fe content exhibits a higher YI value (i.e. the substrate with a coating film is likely to be colored) than Examples 1 to 6, though exhibiting a lower low SY discoloration rate (i.e. higher weather resistance for the substrate with a coating film). Further, Comparative 5, in which Zr is dissolved in titanium oxide to form a solid solution, exhibits a higher SY discoloration rate (i.e. lower weather resistance for the substrate with a coating film) than Examples 1 to 6, though exhibiting a lower YI value (i.e. the substrate with a coating film is less colored). As described above, it is found that a substrate with a coating film that is less colored and exhibits high cracking resistance measured by QUV can be obtained by dissolving both of Fe and Zr in the titanium oxide particles to form a solid solution. Further, Comparative 6 (Mo and Zr are dissolved in titanium oxide to form a solid solution) and Comparative 7 (Sb and Zr are dissolved in titanium oxide to form a solid solution) exhibit low weather resistance for the substrate with a coating film, which presumably shows the significance of dissolving both of Fe and Zr to form a solid solution.

**Claims**

1. Rutile titanium oxide particles comprising Fe and Zr dissolved to form a solid solution, wherein

   an interplanar spacing of a (110) plane obtained by X-ray diffraction measurement is 0.3250 nm or more, and
   an average particle size is in a range from 5 nm to 50 nm.

2. The rutile titanium oxide particles according to claim 1, wherein a Ti content in a $TiO_2$ equivalent is in a range from 40 mass% to 90 mass% with respect to a total mass of the rutile titanium oxide particles.

3. The rutile titanium oxide particles according to claim 1, wherein an Fe content is in a range from 0.01 mol% to 5 mol% with respect to Ti.

4. The rutile titanium oxide particles according to claim 1, wherein a Zr content is in a range from 0.1 mol% to 15 mol% with respect to Ti.

5. The rutile titanium oxide particles according to claim 1, wherein an Sn content is in a range from 1 mol% to 30 mol% with respect to Ti.

6. The rutile titanium oxide particles according to claim 1, wherein an Si content is in a range from 5 mol% to 70 mol% with respect to Ti.

7. The rutile titanium oxide particles according to any one of claims 1 to 6, wherein a Zr/Fe mol ratio is 1 or more.

8. A dispersion solution comprising the rutile titanium oxide particles according to claim 1.

9. A coating-film formation application liquid comprising the rutile titanium oxide particles according to claim 1 and a matrix formation component.

10. A substrate with a coating film comprising the rutile titanium oxide particles according to claim 1.

## INTERNATIONAL SEARCH REPORT

International application No.

**PCT/JP2022/019882**

### A. CLASSIFICATION OF SUBJECT MATTER

*C01G 23/053*(2006.01)i; *C09C 1/36*(2006.01)i; *C09D 17/00*(2006.01)i; *C09D 201/00*(2006.01)i; *C09D 7/61*(2018.01)i
FI: C01G23/053; C09D17/00; C09C1/36; C09D7/61; C09D201/00

According to International Patent Classification (IPC) or to both national classification and IPC

### B. FIELDS SEARCHED

Minimum documentation searched (classification system followed by classification symbols)

C01G23/053; C09C1/36; C09D17/00; C09D201/00; C09D7/61

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2018/181241 A1 (JGC CATALYSTS AND CHEMICALS LTD.) 04 October 2018 (2018-10-04) <br> claims, examples, etc. | 1-10 |
| A | JP 11-292996 A (DAIKIN IND., LTD.) 26 October 1999 (1999-10-26) <br> claims, claim 5, examples, etc. | 1-10 |
| A | JP 7-53215 A (TITAN KOGYO KK) 28 February 1995 (1995-02-28) <br> claims, examples, etc. | 1-10 |
| A | JP 7-187676 A (TITAN KOGYO KK) 25 July 1995 (1995-07-25) <br> claims, examples, etc. | 1-10 |
| A | US 5714260 A (ISHIHARA SANGYO KAISHA, LTD.) 03 February 1998 (1998-02-03) <br> claims, examples | 1-10 |
| A | WO 2009/035019 A1 (M.TECHNIQUE CO., LTD.) 19 March 2009 (2009-03-19) <br> claims, examples, etc. | 1-10 |

☑ Further documents are listed in the continuation of Box C.    ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 July 2022** | **26 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/019882**

**C.    DOCUMENTS CONSIDERED TO BE RELEVANT**

| Category* | Citation of document, with indication, where appropriate, of the relevant passages | Relevant to claim No. |
|---|---|---|
| A | XU, Huifang et al. Journal of Nuclear Materials. 1999, 275(2), pp. 211-215<br>pp. 211-215 | 1-10 |
| P, A | WO 2021/200135 A1 (JGC CATALYSTS AND CHEMICALS LTD.) 07 October 2021<br>(2021-10-07)<br>claims, examples, etc. | 1-10 |

Form PCT/ISA/210 (second sheet) (January 2015)

INTERNATIONAL SEARCH REPORT
Information on patent family members

International application No.

**PCT/JP2022/019882**

| Patent document cited in search report | | | Publication date (day/month/year) | Patent family member(s) | | | Publication date (day/month/year) |
|---|---|---|---|---|---|---|---|
| WO | 2018/181241 | A1 | 04 October 2018 | US | 2020/0087162 | A1 | |
| | | | | claims, examples | | | |
| | | | | EP | 3604226 | A1 | |
| | | | | KR | 10-2019-0135997 | A | |
| | | | | CN | 110809561 | A | |
| | | | | TW | 201843108 | A | |
| JP | 11-292996 | A | 26 October 1999 | (Family: none) | | | |
| JP | 7-53215 | A | 28 February 1995 | (Family: none) | | | |
| JP | 7-187676 | A | 25 July 1995 | (Family: none) | | | |
| US | 5714260 | A | 03 February 1998 | WO | 1995/016637 | A1 | |
| | | | | claims, examples | | | |
| | | | | EP | 684208 | A1 | |
| WO | 2009/035019 | A1 | 19 March 2009 | US | 2010/0202960 | A1 | |
| | | | | claims, examples | | | |
| | | | | EP | 2204351 | A1 | |
| | | | | CN | 101808942 | A | |
| WO | 2021/200135 | A1 | 07 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5002102 A
- JP 11172152 A
- JP 2009155496 A
- JP 2000204301 A
- JP 2009056387 A
- JP 2010168266 A
- JP 2009197078 A